(19) Europäisches Patentamt
European Patent Office
Office européen des brevets

(11) EP 4 745 936 A1

(12) EUROPEAN PATENT APPLICATION

(43) Date of publication:
20.05.2026 Bulletin 2026/21

(51) International Patent Classification (IPC):
$G08G\ 1/01^{(2006.01)}$   $H04W\ 4/44^{(2018.01)}$

(21) Application number: 25195902.9

(22) Date of filing: 14.08.2025

(52) Cooperative Patent Classification (CPC):
G08G 1/0112; G08G 1/0129; G08G 1/0141;
H04W 4/44

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 13.11.2024 JP 2024198257

(71) Applicant: TOYOTA JIDOSHA KABUSHIKI
KAISHA
Toyota-shi, Aichi-ken 471-8571 (JP)

(72) Inventor: KATO, Sei
Toyota-shi, 471-8571 (JP)

(74) Representative: TBK
Bavariaring 4-6
80336 München (DE)

(54) **VEHICLE DATA COLLECTION METHOD**

(57) A vehicle data collection method is a vehicle data collection method for collecting vehicle data related to vehicles via a network. The vehicle data collection method includes calculating a vehicle appearance probability related to an area where the vehicles are traveling based on locations of the vehicles, changing a vehicle data collection setting indicating a setting related to the vehicle data based on the vehicle appearance probability, and transmitting the vehicle data collection setting to the vehicles.

FIG. 2

START

PROCESS LOCATION INFORMATION FOR ALL VEHICLES — S101

CALCULATE VEHICLE APPEARANCE PROBABILITY MATRIX — S102

CALCULATE RESOLUTION OF EACH VEHICLE — S103

CREATE VEHICLE DATA COLLECTION SETTING FILE — S104

S105 — COLLECT VEHICLE DATA

S106 — NO / YES

UPDATE AREA IMPORTANCE — S107

S108 — NO / YES

END

EP 4 745 936 A1

**Description**

BACKGROUND OF THE INVENTION

1. Field of the Invention

The present invention relates to a technical field of vehicle data collection methods.

2. Description of Related Art

As an example of this type of method, there has been proposed a method in which the data amount of vehicle information is monitored on an area-by-area basis and the upload amount of vehicle information is adjusted according to the data amount (see Japanese Unexamined Patent Application Publication No. 2019-079422 (JP 2019-079422 A)).

SUMMARY OF THE INVENTION

There is room for improvement in the technology described in JP 2019-079422 A. The collected data may be analyzed using a learning model constructed by machine learning.

The present invention has been made in view of the above circumstances, and an object of the present invention is to provide a vehicle data collection method with which vehicle data can be collected while reducing a processing load on a vehicle side.

A vehicle data collection method according to one aspect of the present invention is a vehicle data collection method for collecting vehicle data related to vehicles via a network. The vehicle data collection method includes: calculating a vehicle appearance probability related to an area where the vehicles are traveling based on locations of the vehicles; changing a vehicle data collection setting indicating a setting related to the vehicle data based on the vehicle appearance probability; and transmitting the vehicle data collection setting to the vehicles.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing a configuration of a vehicle data collection system according to an embodiment; and
FIG. 2 is a diagram showing an operation of the vehicle data collection system according to the embodiment.

DETAILED DESCRIPTION OF EMBODIMENTS

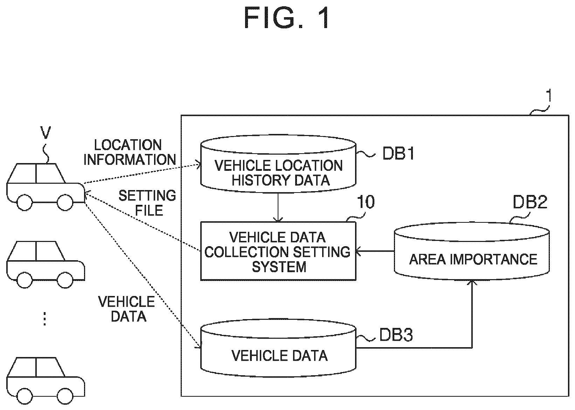

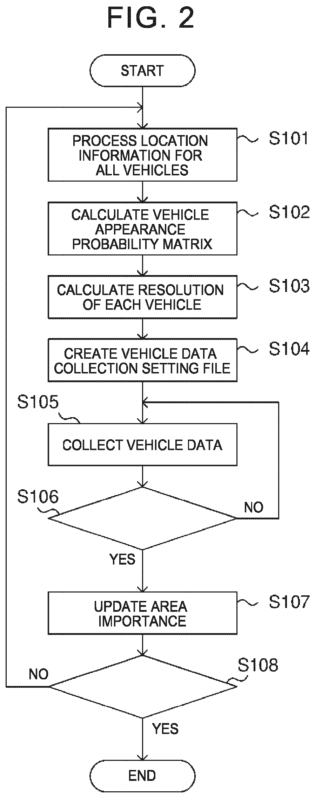

A vehicle data collection method will be described with reference to FIGS. 1 and 2. In FIG. 1, a vehicle data collection system 1 includes a vehicle data collection setting system 10 and databases DB1, DB2, and DB3. For example, the vehicle data collection setting system 10 may be implemented by a server. In this case, the vehicle data collection setting system 10 may be implemented by a single server or may be implemented by a plurality of servers. The server may be a cloud server.

First, an overview of the vehicle data collection system 1 will be described. The vehicle data collection system 1 may acquire vehicle data from a plurality of vehicles including a vehicle V via a network. The vehicle data collection system 1 may estimate at least one of the conditions of each vehicle and the conditions of a region by analyzing the collected vehicle data. The vehicle data collection system 1 may provide each vehicle with a service using the estimation results. At least one of the analysis of the vehicle data and the provision of the service may be performed by a system or device other than the vehicle data collection system 1.

For example, the vehicle data may include at least one of speed, acceleration, braking frequency, steering wheel operation amount, fuel consumption, and wiper operation information. For example, the vehicle data collection system 1 may estimate at least one of a driving behavior and a vehicle state based on the speed, the braking frequency, the steering wheel operation amount, the fuel consumption, and the acceleration pattern. For example, the vehicle data collection system 1 may estimate a traffic congestion status based on the speed, the acceleration, and the braking frequency. For example, the vehicle data collection system 1 may estimate weather conditions based on the wiper operation information. The weather conditions may include information indicating the intensity of rain. For example, the vehicle data collection system 1 may estimate road surface unevenness based on a vertical acceleration. The vehicle data collection system 1 may further estimate at least one of the degree of road infrastructure deterioration and the degree of road surface roughness based on the estimated road surface unevenness. For example, the vehicle data collection system 1 may estimate the occurrence of a collision based on an acceleration in at least one of a fore-and-aft direction and a lateral direction.

Each vehicle may upload (i.e., transmit) raw data to the vehicle data collection system 1 as the vehicle data. However, an onboard device mounted on each vehicle may perform pre-processing on the raw data to reduce communication costs associated with uploading, data storage costs in the vehicle data collection system 1, and data processing costs in the vehicle data collection system 1.

In the regional conditions estimated as described above, the frequency of occurrence varies from region to region. Therefore, when the onboard device mounted on each vehicle performs pre-processing on the raw data and the vehicle data is collected uniformly from all the vehicles, the computer resources of the onboard device may be consumed excessively. In the present embodiment, the excessive consumption of the computer resources related to the onboard device is suppressed by collecting the vehicle data based on a future vehicle appearance probability.

Hereinafter, an operation of the vehicle data collection system 1 will be described with reference to FIG. 2 in addition to FIG. 1. Each of the vehicles uploads location information indicating the location of the vehicle to the vehicle data collection system 1. The vehicle data collection system 1 performs a predetermined process on the uploaded location information, and then stores the location information in the database DB1 (step S101 in FIG. 2). Each vehicle may upload its location information to the vehicle data collection system 1 on a regular or irregular basis. As a result, the database DB1 stores time-series data (i.e., history data) related to the location information of each vehicle.

In FIG. 2, the vehicle data collection setting system 10 of the vehicle data collection system 1 calculates a vehicle appearance probability matrix $P_{ij}$ indicating the future vehicle appearance probability based on the location information stored in the database DB1 (step S102 in FIG. 2). For example, the future vehicle appearance probability may be calculated according to the target of interest (e.g., driving behavior, vehicle state, weather conditions, traffic congestion status, or road surface conditions) and the time scale of its characteristic observation period. For example, when the time scale of the observation period is relatively short (several hours to several days), the future vehicle appearance probability may be calculated using a short-term prediction model such as an ARIMA model, an LSTM model, or an XGBoost model. When the time scale of the observation period is relatively long (several weeks to several months), the future vehicle appearance probability may be calculated using a medium- to long-term prediction model such as a Transformers model or a Gaussian process regression model.

Next, the vehicle data collection setting system 10 calculates an optimal resolution $r_j^*$ of each vehicle based on Expression (1) including the vehicle appearance probability matrix $P_{ij}$, an importance $I_i$ of an area i, and a resolution $r_j$ of a vehicle j (step S103 in FIG. 2). "A" and "B" are constants. The initial value of the importance $I_i$ may be set by an operator of the vehicle data collection system 1. The importance $I_i$ is stored in the database DB2.

Expression 1

$$r_j^* = \mathrm{argmax} \sum I_i P_{ij} r_j \ \ s.t. \ \Sigma r_j = A, \ \ \forall i \ \ 0 \leq r_j \leq B .... (1)$$

In the present embodiment, the "resolution" is a value proportional to a "computer resource usage related to the onboard device." The "resolution" may refer to the amount of data contained in the vehicle data. For example, the vehicle data may include data for a first period (e.g., 0.2 seconds). For example, the vehicle data may include data for a second period (e.g., 1 second) that is longer than the first period. In this case, the vehicle data including data for the first period can be said to have a higher resolution than the vehicle data including data for the second period. For example, the vehicle data may include n types of data. For example, the vehicle data may include m types of data, where m is greater than n. In this case, the vehicle data including m types of data can be said to have a higher resolution than the vehicle data including n types of data.

The process of step S103 will be described using a specific example. The vehicle appearance probability matrix $P_{ij}$ is as follows. That is, the appearance probability of vehicle j = 1 is 0.1 in area i = 1, 0.1 in area i = 2, 0.8 in area i = 3, and 0.0 in area i = 4. The appearance probability of vehicle j = 2 is 0.3 in area i = 1, 0.3 in area i = 2, 0.4 in area i = 3, and 0.0 in area i = 4. The appearance probability of vehicle j = 3 is 0.8 in area i = 1, 0.2 in area i = 2, 0.0 in area i = 3, and 0.0 in area i = 4. The appearance probability of vehicle j = 4 is 0.0 in area i = 1, 0.0 in area i = 2, 0.0 in area i = 3, and 1.0 in area i = 4. The vehicle appearance probability of each vehicle j is normalized.

Expression 2

$$P_{ij} = \begin{pmatrix} 0.1 & 0.3 & 0.8 & 0.0 \\ 0.1 & 0.3 & 0.2 & 0.0 \\ 0.8 & 0.4 & 0.0 & 0.0 \\ 0.0 & 0.0 & 0.0 & 1.0 \end{pmatrix}$$

The importance $l_i$ of the area i is as follows. That is, the importance of area i = 1 is 1.5, the importance of area i = 2 is 0.5, the importance of area i = 3 is 1.0, and the importance of area i = 4 is 1.2.

Expression 3

$$l_i = \begin{pmatrix} 1.5 & 0.5 & 1.0 & 1.2 \end{pmatrix}$$

The resolution $r_j$ of the vehicle j is as follows.

Expression 4

$$\sum_{j=1}^{4} r_j = 40, r_j \leq 30$$

In this case, the optimal resolution $r^*_j$ of each vehicle is as follows. That is, the optimal resolution of vehicle j = 1 is 8.5, the optimal resolution of vehicle j = 2 is 8.5, the optimal resolution of vehicle j = 3 is 11.5, and the optimal resolution of vehicle j = 4 is 11.5.

Expression 5

$$r_j^* = \begin{pmatrix} 8.5 \\ 8.5 \\ 11.5 \\ 11.5 \end{pmatrix}$$

To suppress variation in the optimal resolution $r^*_j$ of each vehicle, "-($r_{max}$ - $r_{min}$)" may be added as a linear sum or an inequality constraint to the evaluation function related to the optimal resolution $r^*_j$. When determining a specific example of the optimal resolution $r^*_j$, the following inequality constraint is added to the evaluation function.

Expression 6

$$r_{max} - r_{min} \leq 3$$

The vehicle data collection setting system 10 creates a vehicle data collection setting file for each vehicle based on the optimal resolution $r^*_j$ calculated in the process of step S103 (step S104 in FIG. 2). The vehicle data collection setting system 10 transmits the vehicle data collection setting file to each vehicle. As a result, the onboard device of each vehicle performs pre-processing on the raw data based on the setting (e.g., the optimal resolution $r^*_j$) indicated by the vehicle data collection setting file. Then, each vehicle uploads the pre-processed data to the vehicle data collection system 1 as the vehicle data. The vehicle data collection system 1 stores the vehicle data uploaded from each vehicle in the database DB3 (step S105 in FIG. 2).

The vehicle data collection system 1 determines whether a sufficient amount of vehicle data has been accumulated in the database DB3 (step S106 in FIG. 2). When determination is made in the process of step S106 that a sufficient amount of vehicle data has not been accumulated in the database DB3 (step S106: No), the process of step S105 is performed again. That is, the processes of steps S105 and S106 are repeated until determination is made in the process of step S106 that a sufficient amount of vehicle data has been accumulated in the database DB3.

When determination is made in the process of step S106 that a sufficient amount of vehicle data has been accumulated in the database DB3 (step S106: Yes), the vehicle data collection system 1 updates the importance $I_i$ of the area i based on the vehicle data stored in the database DB3 (step S107 in FIG. 2).

The vehicle data collection system 1 determines whether to terminate the collection of the vehicle data (step S108 in FIG. 2). When determination is made in the process of step S108 not to terminate the collection of the vehicle data (step S108: No), the process of step S101 is performed again. When determination is made in the process of step S108 to terminate the collection of the vehicle data (step S108: Yes), the operation shown in FIG. 2 is terminated.

Technical Effects

For example, in the vehicle data collection system 1, the optimal resolution $r^*_j$ may be set relatively low for a vehicle passing through an area where the future vehicle appearance probability is relatively high. This is because a relatively large amount of vehicle data can be collected in such an area. For example, in the vehicle data collection system 1, the optimal resolution $r^*_j$ may be set relatively high for a vehicle passing through an area where the future vehicle appearance probability is relatively low and the importance is relatively high. This is because a relatively large amount of vehicle data can be collected from a relatively small number of vehicles by making such a setting. By calculating the future vehicle appearance probability as described above in the present embodiment, it is possible to collect a relatively large amount of vehicle data for the area where the importance is relatively high without wasting the computer resources related to the onboard device of the vehicle (i.e., while suppressing excessive consumption of the computer resources).

Aspects of the invention derived from the above embodiment will be described below.

A vehicle data collection method according to one aspect of the invention is a vehicle data collection method for collecting vehicle data related to vehicles via a network. The vehicle data collection method includes: calculating a vehicle appearance probability related to an area where the vehicles are traveling based on locations of the vehicles; changing a vehicle data collection setting indicating a setting related to the vehicle data based on the vehicle appearance probability; and transmitting the vehicle data collection setting to the vehicles.

In one example of the vehicle data collection method, the setting related to the vehicle data may include usages of computer resources of the vehicles, and in the changing, the usages may be changed based on the vehicle appearance probability.

In this case, an importance may be set for the area, and in the changing, the usages may be changed based on the vehicle appearance probability and the importance.

The present invention is not limited to the above embodiment, and can be modified as appropriate without departing from the gist and spirit of the invention that can be read from the claims and the entire specification, and a vehicle data collection method including such modifications is also included in the technical scope of the present invention.

**Claims**

1. A vehicle data collection method for collecting vehicle data related to vehicles via a network, the vehicle data collection method comprising:

    calculating a vehicle appearance probability related to an area where the vehicles are traveling based on locations of the vehicles;
    changing a vehicle data collection setting indicating a setting related to the vehicle data based on the vehicle appearance probability; and
    transmitting the vehicle data collection setting to the vehicles.

2. The vehicle data collection method according to claim 1, wherein:

    the setting related to the vehicle data includes usages of computer resources of the vehicles; and
    in the changing, the usages are changed based on the vehicle appearance probability.

3. The vehicle data collection method according to claim 2, wherein:

    an importance is set for the area; and

in the changing, the usages are changed based on the vehicle appearance probability and the importance.

# FIG. 1

# FIG. 2

```
                    ┌──────────┐
                    │  START   │
                    └────┬─────┘
                         │
          ┌──────────────┤
          │              ▼
          │    ┌─────────────────────┐
          │    │  PROCESS LOCATION   │ ～ S101
          │    │   INFORMATION FOR   │
          │    │    ALL VEHICLES     │
          │    └──────────┬──────────┘
          │               ▼
          │    ┌─────────────────────┐
          │    │  CALCULATE VEHICLE  │ ～ S102
          │    │     APPEARANCE      │
          │    │  PROBABILITY MATRIX │
          │    └──────────┬──────────┘
          │               ▼
          │    ┌─────────────────────┐
          │    │ CALCULATE RESOLUTION│ ～ S103
          │    │   OF EACH VEHICLE   │
          │    └──────────┬──────────┘
          │               ▼
          │    ┌─────────────────────┐
          │    │  CREATE VEHICLE DATA│ ～ S104
          │    │COLLECTION SETTING FILE│
          │    └──────────┬──────────┘
          │               │
     S105 │               ▼◄──────────┐
          │    ┌─────────────────────┐│
          │    │ COLLECT VEHICLE DATA││
          │    └──────────┬──────────┘│
          │               ▼           │
     S106 │          ◇─────────◇  NO  │
          │         ◇           ◇─────┘
          │          ◇─────────◇
          │               │ YES
          │               ▼
          │    ┌─────────────────────┐
          │    │    UPDATE AREA      │ ～ S107
          │    │    IMPORTANCE       │
          │    └──────────┬──────────┘
          │               ▼
          │   NO     ◇─────────◇  S108
          └─────────◇           ◇
                     ◇─────────◇
                          │ YES
                          ▼
                    ┌──────────┐
                    │   END    │
                    └──────────┘
```

Europäisches
Patentamt

European
Patent Office

Office européen
des brevets

# EUROPEAN SEARCH REPORT

**Application Number**

EP 25 19 5902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/250966 A1 (ROM OFRI [IL] ET AL) 6 August 2020 (2020-08-06) <br> * paragraph [0062] * <br> * paragraph [0064] * <br> * paragraph [0070] * <br> * paragraphs [0090] - [0093] * <br> ----- | 1-3 | INV. <br> G08G1/01 <br> H04W4/44 |
| X | US 2020/249041 A1 (BEGLEITER RON [IL] ET AL) 6 August 2020 (2020-08-06) <br> * the whole document * <br> ----- | 1-3 | |

|  |  |  | **TECHNICAL FIELDS SEARCHED (IPC)** |
|---|---|---|---|
|  |  |  | G08G <br> H04W |

The present search report has been drawn up for all claims

| Place of search | Date of completion of the search | Examiner |
|---|---|---|
| The Hague | 28 January 2026 | de la Cruz Valera, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ...................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 5902

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | Publication date | Patent family member(s) | Publication date |
|---|---|---|---|
| US 2020250966 A1 | 06-08-2020 | NONE | |
| US 2020249041 A1 | 06-08-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019079422 A